# EUROPÄISCHE PATENTSCHRIFT

(11) **EP 2 392 046 B1**
(45) Veröffentlichungstag und Bekanntmachung des Hinweises auf die Patenterteilung: **12.12.2012**
(21) Anmeldenummer: 10703036.3
(22) Anmeldetag: 27.01.2010
(51) Int. Cl.: H01M 8/10

(54) **BRENNSTOFFZELLMEMBRAN**
FUEL CELL MEMBRANE
MEMBRANE POUR PILE À COMBUSTIBLE

(30) Priorität: 28.01.2009 DE 102009006493
(43) Veröffentlichungstag der Anmeldung: 07.12.2011
(73) Patentinhaber: Sachtleben Pigment GmbH, 47829 Krefeld (DE)
(72) Erfinder: AUER, Gerhard, 47800 Krefeld (DE); DI VONA, Maria Luisa, I-00127 Rom (IT); SGRECCIA, Emanuela, I-00147 Rom (IT)
(74) Vertreter: Nobbe, Matthias
(86) Internationale Anmeldenummer: PCT/EP2010/050940
(87) Internationale Veröffentlichungsnummer: WO 2010/086332

(56) Entgegenhaltungen:
- JP-A- 9 100 437
- JP-A- 11 228 875
- US-A- 6 059 943
- US-A1- 2006 019 148
- US-A1- 2006 182 942

## Beschreibung

Die vorliegende Erfindung bezieht sich auf Brennstoffzellmembranen, die ein organisches Polymermaterial und ein anorganisches Füllmaterial, das mit organischen Verbindungen funktionalisiert ist, umfassen, Verfahren zur Herstellung solcher Membranen, die Verwendung dieser Membranen für die Herstellung von Brennstoffzellen sowie Brennstoffzellen, die solche Membranen enthalten.

Protonenaustauschmembranen sind Schlüsselbestandteile von Polymerelektrolytbrennstoffzellen (PEMFCs). Polymerelektrolytbrennstoffzellen sind elektrochemische Einheiten, die in der Lage sind Energie mit hoher Effizienz und geringen Emissionen von Treibhausgasen zu erzeugen (A.J. Appleby, F.R. Foulkes Fuel Cell Handbook, Van Nostrand Reinhold, New York 1989). In diesen Brennstoffzellen dienen die sogenannten Ionomermembranen der Trennung zwischen den beiden Elektroden und wirken gleichzeitig als Elektrolyt für den Protonentransport.

Typischerweise bestehen die Membranen, die in Brennstoffzellen mit Wasserstoff oder Methanol als Brennstoff verwendet werden, aus fluorierten Polymeren. Diese Polymere zeichnen sich durch ihre chemische, thermische und mechanische Widerstandsfähigkeit und ihre hohen Protonenleitfähigkeit aus (O. Savadogo J. Power Sources 2004, 127, 135). Von diesen Membranmaterialien ist das Perfluorsulfonsäurepolymer Nafion® am besten untersucht. Nafion® besitzt eine chemische Struktur, die aus einem perfluoriertem Rückgrat mit Vinyletherseitenketten, die am Ende Sulfonsäuregruppen (SO₃H-Gruppen) tragen, besteht. Aufgrund der Sulfonsäuregruppen, die mit dem perfluorierten Rückgrat verbunden sind, sind Polymere wie Nafion® Supersäuren (pKa = -6). Im trockenen Zustand sind Membranen aus diesen Polymeren sehr schlechte Ionenleiter, aber mit dem Wassergehalt steigt die Ionenleitfähigkeit an und erreicht im vollständig hydratisierten Zustand Werte im Bereich von 0,1 Scm⁻¹ (V. Anantaraman, C.L. Gardner, J. Electroanalytical Chem. 1996,414,115).

Nafion® weist jedoch eine Reihe von Nachteilen auf, die bei der Verwendung in Brennstoffzellen überwunden werden müssen, wie z. B. der hohe Preis und, im Fall von Methanolbrennstoffzellen, der Durchtritt von Methanol durch die Membran zu der Kathode, was zu einem Leistungsabfall der Zelle und bei Temperaturen über 80°C zu einem Absinken der Leitfähigkeit führt. Dieses Phänomen ist immer noch nicht gut verstanden.

Um das Vergiften der Anode (die Platin als Katalysator enthält) durch adsorbiertes CO, das als Verunreinigung im Brennstoff enthalten ist, zu verringern und die Kinetik der Brennstoffoxidation zu verbessern, was zu einer Verbesserung der Effizienz der Brennstoffzelle führt, ist es jedoch wünschenswert bei Temperaturen über 80°C, bevorzugt im Bereich von 120-140°C, zu arbeiten.

Des Weiteren wird bei einer niedrigen Betriebstemperatur im Bereich der Kathode kontinuierlich flüssiges Wasser erzeugt, was zum Überlaufen der Brennstoffzelle führen kann.

In der Vergangenheit wurde einiger Aufwand betrieben, um protonenleitende Nanokomposit- und Hybridpolymere, die auf nicht-fluorierten Kohlenwasserstoffen basieren, zu entwickeln (M.A. Hickner, H. Ghassemi, Y.S. Kim, B.R. Einsla und J.E. McGrath, Chem. Rev. 104,4587 (2004)).

Polyaromatische Polymere, wie z.B. Polyetherketon (PEK), mit einer variierenden Zahl an Ether- und Ketofunktionen (wie z.B. PEEK, PEKK, PEKEKK usw.) zeigen eine chemische, mechanische und thermische Stabilität die mit der von fluorierten Polymeren vergleichbar ist, sind aber deutlich kostengünstiger. Ein weiterer interessanter Aspekt polyaromatischer Polymere ist die Möglichkeit, diese in größerem Maßstab funktionalisieren zu können. Die Funktionalisierung kann mittels Säuredotierung, chemischer Übertragung von protogenen Gruppen oder direkter Sulfonierung mittels elektrophiler Substitution des Polymerrückgrats erfolgen.

Polyetheretherketon (PEEK) ist ein semikristallines, thermoplastisches Polymer mit einem aromatischen, nicht fluorierten Rückgrat, in dem 1,4-disubstituierte Phenylgruppen durch Ether (-O-) und Carbonyl (-CO-) Bindungen verbrückt werden. Protonenleitfähigkeit kann durch Sulfonierung erreicht werden und ist ausreichend, um die Erfordernisse, die für die Anwendung in Brennstoffzellen benötigt werden, zu erfüllen. Die chemischen Strukturen von PEEK und sulfoniertem PEEK (SPEEK) sind:

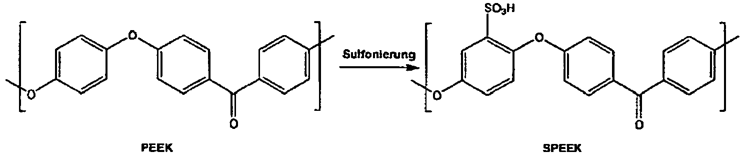

Um die gewünschte Leistung zu erreichen, muss eine komplexe Polymerarchitektur entwickelt werden: Hydrophobe, steife, thermoplastische Polymerhauptketten für die mechanische und chemische Stabilität kombiniert mit flexibleren und hydrophilen sulfonierten Seitenketten für die Protonenleitfähigkeit. Es wird erwartet, dass diese Architektur die Phasentrennung zwischen den hydrophoben und hydrophilen Domänen verstärkt, was ein Faktor für die Kontrolle der Wasserführung und Protonenleitfähigkeit in Polymerelektrolytmembran-Brennstoffzellen (PEMFCs) ist.

Die Protonenleitfähigkeit in sulfoniertem PEEK ist abhängig vom Wassergehalt; folglich ist der Grad der Hydratation ein entscheidender Faktor für bessere elektrochemische Leistung. Die Wasseraufnahme steigt mit dem Grad der Sulfonierung und verbessert so die Leitfähigkeit der hydratisierten Membran. Um eine ausreichende Leitfähigkeit zu erhalten, ist es notwendig einen relativ hohen Grad an Sulfonierung (DS = Anzahl von -SO₃H-Gruppe pro Wiederholungseinheit) von ungefähr 0,6 oder mehr zu verwenden. In diesen Systemen führt ein hoher Sulfonierungsgrad jedoch zu einer Abnahme der mechanischen Eigenschaften, Quellen der Membran und einem Abfall der Leitfähigkeit bei etwa 80°C. Das ist auf die Tatsache zurückzuführen, dass hochpolare Wassermoleküle als Weichmacher wirken, die die elektrostatischen Wechselwirkungen zwischen SPEEK Molekülketten stören und ein Quellen der Membran verursachen. Hochgradig sulfoniertes PEEK quillt in Wasser ziemlich stark auf und wird, wenn der Sulfonierungsgrad hoch genug ist, wasserlöslich. Aus diesem Grund fehlt hochgradig sulfonierten PEEK-Membranen die notwendige Langzeitstabilität.

Die Nützlichkeit von Membranen, die aus sulfonierten PEEK-Polymeren bestehen, wird daher durch zu hohe Wasseraufnahmekoeffizienten, Quellen der Membran bei hoher relativer Luftfeuchtigkeit und bei Kontakt mit flüssigem Wasser, niedrige Protonenleitfähigkeit bei Temperaturen über 80°C und geringe mechanische Festigkeit eingeschränkt.

Um diese Nachteile zu überwinden, wurden in der Vergangenheit verschiedene Synthesestrategien angewandt, wie beispielsweise die Synthese neuer leitfähiger Materialien, die Herstellung quervernetzter Polymere, die Verwendung unterschiedlicher Polymermischungen und die Herstellung von Komposit-Hybridmembranen, in denen ein anorganischer Bestandteil in einer organischen Matrix dispergiert ist (Klasse 1 Hybride) (E. Sgreccia, M. Khadhraoui, C. de Bonis, S. Licoccia, M. L. Di Vona, P. Knauth, J. Power Sources, 2008, 178, 667). Die Wechselwirkungen zwischen dem organischen und dem anorganischen Teil des Hybridsystems können von einer sehr starken, wie z.B. kovalenten Bindung, bis hin zu sehr schwachen Interaktionen supramolekularer Natur variieren und die resultierenden Materialien wurden als Nanokomposit bzw. organisch-anorganische Hybride klassifiziert. Bonnet et al. (B. Bonnet, D. J. Jones, J. Roziere, L. Tchicaya, G. Alberti, M. Casciola, L. Massinelli, B. Bauer, A. Peraio and E. Ramunni, J. New Mater. Electrochem. Syst. 2000, 3, 87) verwendeten SiO₂, Zirkoniumphosphat und Zirkoniumsulfophenylphosphonate als anorganische Bestandteile in einer sulfonierten PEEK-Matrix. Gemäß den beschriebenen Protokollen wurde SPEEK mit einem Sulfonierungsgrad, der auf 60% begrenzt war, bei 130°C unter Stickstoff in N-Methylpyrrolidon oder Dimethylacetamid (15% w/w) aufgelöst und alle anorganischen Zusätze wurden durch Ausfällen in der gelösten Polymermatrix hergestellt. Die Hybridmembranen wurden zuerst in Phosphorsäure (85%, 80°C, 5 Tage) und dann in kochendem Wasser (4 Stunden) vorbehandelt, um die basischen Lösungsmittel zu entfernen. Die präparativen Bedingungen, die von Bonnet et al. verwendet wurden, waren daher zu zeitaufwändig und zu teuer, um sie im industriellen Maßstab zu realisieren. Zusätzlich war die Leitfähigkeit der Hybridmembran durch die Begrenzung des Sulfonierungsgrades auf 60% signifikant eingeschränkt.

EP 1 191 621 beschreibt ebenfalls die Herstellung einer Hybridmembran, wobei die anorganischen Oxide SiO₂, TiO₂ und ZrO₂ durch Ausfällen direkt in der Polymermatrix hergestellt wurden. Gemäß dem offenbarten Herstellungsverfahren ist eine längere Behandlung (1 Woche) mit Phosphorsäure notwendig, auf der einen Seite zur Entfernung des basischen Lösungsmittels, Dimethylformamid, und auf der anderen Seite, um die Leitfähigkeit der Membran durch die Phosphatierung der Oxidpartikel zu verbessern. Das beschriebene Verfahren leidet daher unter denselben Nachteilen wie das Verfahren von Bonnet et al.

Es wurden viele Versuche unternommen, um die Eigenschaften von Brennstoffzellmembranen, die auf organischen Polymeren basieren, durch den Einschluss von anorganischen Füllmaterialien in der organischen Matrix, z.B. das Einschließen von Zirkoniumdioxid oder organisch modifizierten Silikaten, zu verbessern (V.S. Silva , S. Weisshaar, R. Reissner, B. Ruffmann , S.Vetter , A. Mendes, L.M. Madeira and S.P. Nunes, J. Pow. Sources 145, 485 (2005)).

Versuche Nanokompositmembranen durch in-situ Erzeugung einer Siliziumdioxid-Phase in SPEEK-Membranen herzustellen, waren jedoch nicht erfolgreich, da große Partikel gebildet wurden und es zur Autoaggregation der Siliziumdioxid-Phase kam. Darüber hinaus bildeten sich in der Polymermatrix während der Hydrolyse von Silanen Hohlräume (C.S. Karthikeyan, S.P. Nunes and K. Schulte, Macromol. Chem. Phys. 207, 336 (2006)). Darüber hinaus ist es ebenfalls sehr schwierig mittels des Sol-Gel-Verfahrens eine homogene Dispersion von SiO₂ Partikeln innerhalb der SPEEK-Matrix zu erreichen und in den so erhaltenen Kompositmembranen ist der Grad der Adhäsion zwischen den anorganischen Domänen und der Polymermatrix nur sehr niedrig.

Eine angemessene Kontrolle auf atomarer Stufe und das Dispergieren von anorganischen Bestandteilen ist entweder durch kovalente Bindung von anorganischen Bestandteilen an die Polymermatrix oder durch das Verwenden von organisch funktionalisiertem Siliziumdioxid möglich (V.S. Silva, B. Ruffmann, H. Silva, Y. A Gallego, A. Mendes, L. M. Madeira and S.P. Nunes, J. Pow. Sources, 140, 34 (2005)). Während das Einführen von nicht-funktionalisiertem Siliziumdioxid in SPEEK-Membranen zu einer Verschlechterung der mechanischen Eigenschaften der Kompositmaterialien führt, zeigen Hybridmembranen und Membranen, die organischfunktionalisiertes Siliziumdioxid enthalten, verglichen mit nicht-modifiziertem SPEEK dieselben oder sogar bessere mechanische Eigenschaften.

Die Hydrolyse von Ti(OEt)₄ in der Polymerlösung erlaubt die Synthese von Nanokomposit SPEEK/TiO₂ Membranen, aber die Synthese ist schwierig durchzuführen, weil sie in wasserfreiem Lösungsmittel durchgeführt werden muss.

SPEEK-Membranen mit eingeschlossenen Heteropolysäuren (insbesondere H₃PMo₁₂O₄₀29H₂O und H₃PW₁₂O₄₀29H₂O) weisen bei Temperaturen über 100°C Leitfähigkeiten bis zu einem Maximalwert von ungefähr 10⁻¹ Scm⁻¹ auf. Die Nützlichkeit solcher Membranen ist jedoch sehr begrenzt, da sich die Heteropolysäuren im Wasser auflösen und während des Betriebs der Brennstoffzelle aus der Membran ausgewaschen werden.

Sulfoniertes Diphenylsilandiol (SDPDO) kann ohne Schwierigkeiten homogen in einer SPEEK-Matrix dispergiert werden, da aufgrund der sterischen Hinderung durch die Phenylgruppen keine Kondensation stattfindet. Da aber die maximale Verwendungstemperatur des resultierenden Materials sehr begrenzt ist, ist es für Brennstoffzellmembranen, die bei Temperaturen über 80°C betrieben werden, nicht geeignet.

Mit Nafion®-SiO₂ Kompositmembranen wurde bei Experimenten verglichen mit Nafion® Membranen eine leichte Abnahme der Leistung beobachtet.

Demzufolge weisen alle bekannten organisch-anorganischen Hybridmaterialien schwerwiegende Nachteile auf, die ihre Verwendbarkeit und Nützlichkeit in Brennstoffzellen einschränken. Bei diesen Nachteilen handelt es sich u. a. um strukturelle Defekte, wie z.B. Löcher in der Membran oder die Auto-Aggregation anorganischer Partikel, niedrige Maximaltemperaturen, unzureichende mechanische Eigenschaften und hohe Wasserlöslichkeit.

Es besteht daher nach wie vor Bedarf für Membranen für Polymerelektrolytbrennstoffzellen, die die Nachteile existierender Materialien überwinden.

Dieser Bedarf wird durch die Membranen der vorliegenden Erfindung verfüllt.

In einem ersten Aspekt richtet sich die Erfindung daher auf eine Brennstoffzellmembran nach Anspruch 1.

Die vorliegende Erfindung betrifft somit Brennstoffzellmembranen gemäß Anspruch 1, die ein organisches Polymer als Basismaterial und ein anorganisches Füllmaterial umfassen, wobei das anorganische Füllmaterial mit organischen Resten funktionalisiert ist, die an die Oberfläche des anorganischen Füllmaterial gebunden sind.

In einem weiteren Aspekt betrifft die vorliegende Erfindung ein Verfahren zur Herstellung einer Brennstoffzellmembran gemäß der vorliegenden Erfindung, wobei das Verfahren die Schritte umfasst:
Umsetzen des anorganischen Füllmaterials mit einer organischen Verbindung, um ein organisch funktionalisiertes anorganisches Füllmaterial zu erhalten;
Dispergieren des organisch funktionalisierten anorganischen Füllmaterials in einem organischen Polymermaterial, das in einem geeigneten Lösungsmittel gelöst ist, um eine Hybridpolymerlösung zu erhalten; und
Entfernen des Lösungsmittels aus der Hybridpolymerlösung, um die Membran zu erhalten.

In noch einem weiteren Aspekt bezieht sich die Erfindung auf die Verwendung der Membran gemäß der vorliegenden Erfindung für die Herstellung einer Brennstoffzelle, insbesondere einer Polymerelektrolytbrennstoffzelle (PEMFC).

Die vorliegende Erfindung umfasst ferner auch eine Brennstoffzelle, die eine Membran gemäß der vorliegenden Erfindung enthält.

### Beschreibung der Zeichnungen

- Fig. 1: zeigt eine Auftragung der Ionenleitfähigkeit von SPEEK-Membranen mit 5 Gew.-% TiO₂, das mit Silikonöl (10%) funktionalisiert ist, gegen die relative Luftfeuchtigkeit.
- Fig. 2: zeigt eine Auftragung der Ionenleitfähigkeit von SPEEK-Membranen mit 5 Gew.-% TiO₂, das mit Silikonöl (10%) funktionalisiert ist, gegen die Temperatur.
- Fig. 3: zeigt die dynamische mechanische Analyse von reinen SPEEK-Membranen und SPEEK-Membranen, die 5 Gew.-% TiO₂, das entweder mit Silikonöl (10%) oder Trimethylolpropan (10%) funktionalisiert ist, enthalten.
- Fig. 4: zeigt AFM-Bilder einer SPEEK-Membran mit 5 Gew.-% TiO₂, das mit Silikonöl (10%) funktionalisiert ist.

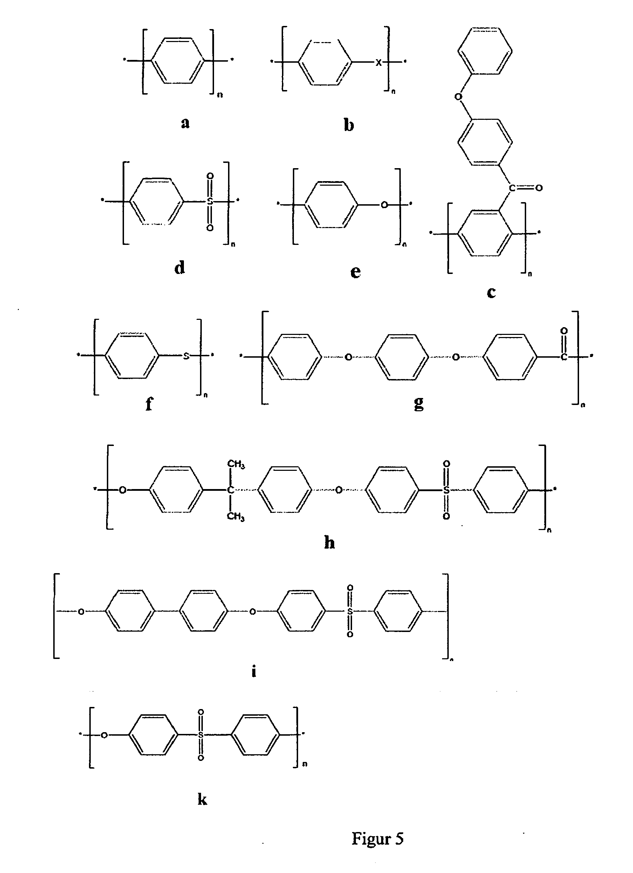

- Fig. 5: zeigt die chemische Struktur von einigen organischen Polymermaterialien, die sulfoniert werden und als organische Polymermaterialien in den Membranen gemäß der Erfindung verwendet werden können. a: Poly-p-Phenylen (PP), b: Kommerziell erhältliches aromatisches Polymer, c: Poly(4-Phenoxybenzoyl-1,4-Phenylen) (PPBP), d: Poly-p-Phenylensulfon, e: Polyphenylenoxid (PPO), f: Polyphenylensulfid (PPS), g: Polyetheretherketon (PEEK), h: Polysulfon (PSF), i: Polyphenylsulfon (PPSU), k: Polyethersulfon (PES).

### Detaillierte Beschreibung:

Die vorliegende Erfindung basiert auf der Erkenntnis der Erfinder, dass Brennstoffzellmembranen, die ein organisches Polymermaterial und ein anorganisches Füllmaterial, das mit organischen Resten funktionalisiert ist, enthalten, eine gute Protonenleitfähigkeit bei Temperaturen von 120-140°C, eine gute mechanische und thermische Stabilität, ein gutes Wasserrückhaltevermögen bei hohen Temperaturen, eine gute chemische Stabilität in der stark oxidierenden Umgebung der Brennstoffzellenkathode und eine niedrige Durchlässigkeit für den Brennstoff zeigen. Gleichzeitig können sie relativ kostengünstig hergestellt werden.

Die organischen Reste, die zur Funktionalisierung des anorganischen Füllmaterials der Membranen der vorliegenden Erfindung dienen, können hydrophob oder hydrophil sein. Alternativ können die organischen Reste auch hydrophobe und hydrophile Anteile umfassen.

In einer Ausführungsform sind die organischen Reste mittels einer kovalenten und/oder einer nicht-kovalenten Bindung an die Oberfläche des anorganischen Materials gebunden. Die kovalente Bindung kann beispielsweise über eine kovalente chemische Bindung zwischen einem Kohlenstoff- oder einem Siliziumatom des organischen Rests und der Oberfläche des anorganischen Materials, z.B. einem Sauerstoffatom, erfolgen. Die kovalente Bindung des organischen Restes über ein Siliziumatom kann beispielsweise durch Reaktion einer Si-H Gruppe mit der Oberfläche des anorganischen Materials, z.B. einer sauerstoffhaltigen Gruppe, erfolgen.

Eine nicht-kovalente Bindung kann beispielsweise durch Wasserstoftbrückenbindungen und/oder van-der-Waals Wechselwirkungen erfolgen. Für Wasserstoffbrückenbindungen mit der Oberfläche des anorganischen Füllmaterials kann der organische Rest eine oder mehrere Hydroxyl-Gruppen, bevorzugt mindestens 3 Hydroxylgruppen aufweisen. Um genügend starke van-der-Waals Wechselwirkungen zu ermöglichen, kann der organische Rest in einer Ausführungsform ein Molekulargewicht von mindestens 800, bevorzugt mindestens 2000 oder 5000 besitzen. In einer Ausführungsform der Erfindung können die organischen Reste eine organische Beschichtung der Oberfläche des anorganischen Materials bilden.

Die organischen Reste können entweder aus organischen Resten oder Resten, die organische Gruppen einschließen, wie z. B. organische Siliziumverbindungen, ausgewählt werden. "Organisch" bedeutet in diesem Zusammenhang, dass der Rest eine Kohlenstoffverbindung ist und ein Grundgerüst aus Kohlenstoffatomen aufweist. Beispiele für organische Reste schließen ein, aber sind nicht begrenzt auf substituiertes und unsubstituiertes C₁-C₃₀ Alkyl, vorzugsweise C₁-C₂₀ Alkyl, das verzweigt oder geradkettig sein kann, substituiertes und unsubstituiertes C₁-C₂₀ Alkenyl, substituiertes und unsubstituiertes C₁-C₂₀ Alkinyl, substituiertes und unsubstituiertes C₁-C₂₀ Alkoxy, substituiertes und unsubstituiertes C₃-C₂₀ Cycloalkyl, substituiertes und unsubstituiertes C₆-C₂₀ Aryl, substituiertes und unsubstituiertes C₅-C₂₀ Heteroaryl und substituierte und unsubstituierte C₅-C₂₀ heteroalicyclische Ringe. Weitere Beispiele sind Alkylaryl, Alkylheteroaryl, Alkylcycloalkyl Arylalkyl, Heteroarylalkyl und Cyloalkylalkyl, wobei die jeweiligen Bestandteile wie zuvor definiert sind und jeweils substituiert oder unsubstituiert sein können. Wenn substituiert, ist die Substituentengruppe eine oder mehrere, z. B. eine, zwei, drei, vier oder fünf Gruppen, die unabhängig aus der Gruppe bestehend aus Hydroxy, Carbonyl, Carboxy, C-Carbamid, N-Carbamid, C₁-C₁₀ Alkyl, C₁-C₁₀ Alkenyl, C₁-C₁₀ Alkinyl, C₁-C₁₀ Alkoxy, Mercapto, Cyano, Halo, Nitro, Silyl, Silanol, Sulfinyl, Sulfonyl und Amino ausgewählt werden.

In einer Ausführungsform der Erfindung umfassen die organischen Reste Polysiloxane, z.B. Silikonöle. Bei diesen Siloxanen kann es sich beispielsweise um Diorganopolysiloxane oder Organopolysiloxane handeln, wobei der Organorest Alkyl, Phenyl, Vinyl und/oder Trifluoralkyl sein kann. Alkyl kann in diesem Zusammenhang C₁-C₃₀ Alkyl, vorzugsweise C₁-C₂₀ Alkyl, noch bevorzugter C₁-C₁₀ Alkyl sein. In einer Ausführungsform werden die Silikonöle aus Polydimethylsiloxan, Polydiphenylsiloxan, Polymethylphenylsiloxan, Polyphenylhydrosiloxan und/oder Polymethylhydrosiloxan ausgewählt. Besonders bevorzugt ist Polymethylhydrosiloxan.

In einer anderen Ausführungsform sind die organischen Reste aromatische oder aliphatische Polyalkohole. In einer spezifischen Ausführungsform umfassen diese Polyalkohole mindestens zwei, bevorzugt mindestens drei Hydroxylgruppen. Der Polyalkohol kann ein aliphatischer Polyalkohol sein, der mindestens drei Hydroxylgruppen umfasst. Beispiele für solche Alkohole sind Trimethylolethan, Trimethylolpropan, Trimethylolbutan oder Trimethylolpentan. Beispiele für aromatische Alkohole sind Phenole, Diphenole und Triphenole sowie andere mehrwertige aromatische Alkohole mit kondensierten Ringsystemen.

In einer besonderen Ausführungsform handelt es sich bei den organischen Resten um Mischungen der vorgenannten Polysiloxane und Polyalkohole.

Das organische Polymermaterial der Membran der vorliegenden Erfindung dient als Basismaterial (Matrix). Es kann jedes geeignete organische Polymer sein, aber ist vorzugsweise ein sulfoniertes organisches Polymer. Wenn das organische Material ein sulfoniertes organisches Polymer ist, ist der Sulfonierungsgrad vorzugsweise ≥ 0,6 pro Wiederholungseinheit, z. B. ≥ 0,65, ≥ 0,7, ≥ 0,75, ≥ 0,8, ≥ 0,85 oder ≥ 0,9 pro Wiederholungseinheit (d.h. pro monomerer Einheit des Polymers).

In spezifischen Ausführungsformen der Erfindung ist das organische Polymermaterial der erfindungsgemäßen Membranen ein sulfoniertes organisches Polymer ausgewählt aus der Gruppe bestehend aus sulfoniertem Tetrafluorethylen Copolymeren (Nafion®), sulfonierten Polyetherketonen (SPEK), sulfonierten Polyetherketonketonen (SPEKK), sulfonierten Polyetheretherketonen (SPEEK), sulfonierten Polyetherketonetherketonketonen (SPEKEKK), sulfonierten Poly-p-Phenylenen (SPP), sulfonierten Poly(4-Phenoxybenzoyl-1,4-Phenylenen) (SPPBP), sulfonierten Polyphenylenoxiden (SPPO), sulfonierten Polyphenylensulfiden (SPPS), sulfonierten Polysulfonen (SPSF), sulfonierten Polyphenylsulfonen (SPPSU) und sulfonierten Polyethersulfonen (SPES). In einer Ausführungsform ist der Sulfonierungsgrad der zuvor erwähnten Polymere ≥ 0,6 pro Wiederholungseinheit, z.B. > 0,6, ≥ 0,65, ≥ 0,7, ≥ 0,75, ≥ 0,8, ≥ 0,85 oder ≥ 0,9 pro Wiederholungseinheit.

In einer bevorzugten Ausführungsform ist das organische Polymermaterial SPEEK mit einem Sulfonierungsgrad von ≥ 0,6 pro Wiederholungseinheit, z.B. > 0,6, ≥ 0,65, ≥ 0,7, ≥ 0,75, ≥ 0,8, ≥ 0,85 oder ≥ 0,9 pro Wiederholungseinheit.

In einer Ausführungsform der Erfindung handelt es sich bei dem anorganischen Füllmaterial um ein Oxid, beispielsweise ein Metalloxid. In besonderen Ausführungsformen der Erfindung besteht das anorganische Füllmaterial aus Partikeln, vorzugsweise Nanopartikeln.

Das anorganische Füllmaterial kann in dem organischen Grundmaterial dispergiert sein.

In einer Ausführungsform besteht das anorganische Füllmaterial aus Nanopartikeln und hat einen durchschnittlichen Partikeldurchmesser von ≤ 100 nm. In besonderen Ausführungsformen kann die mittlere Partikelgröße ≤ 50 nm oder sogar ≤ 10 nm betragen.

In einer Ausführungsform der Erfindung hat das anorganische Füllmaterial eine BET Oberfläche von ≥ 20 m²/g, vorzugsweise ≥ 50, ≥70, ≥ 100, ≥150 oder ≥ 200 m²/g, noch bevorzugter ≥ 250 m²/g.

In einer Ausführungsform zeigt das anorganische Füllmaterial (ohne die organische Funktionalisierung) einen Glühverlust von ≥ 1 Gew.-%, ≥ 2,5 Gew.-% oder ≥ 10 Gew.-%.

In den erfindungsgemäßen Membranen kann der Anteil an anorganischem Füllmaterial 1-20 Gew.-% bezogen auf die Gesamtmasse der Membran betragen. In einer Ausführungsform beträgt die Menge 2 - 15 Gew.-%, 3 - 10 Gew.-% oder 4 - 8 Gew.-%, z. B. ungefähr 5 Gew.-%.

In einer spezifischen Ausführungsform der Erfindung ist oder enthält das anorganische Füllmaterial Titandioxid. Das Titandioxid kann nanokristallines Titandioxid sein. Das Titandioxid kann vollständig oder teilweise in Form von Anatas vorliegen. In bestimmten Ausführungsformen ist das anorganische Füllmaterial nanokristallines Titandioxid, wobei ≥ 50, ≥75 oder ≥90 % als Anatas vorliegen.

Das Titandioxid stammt vorzugsweise aus dem Sulfatverfahren zur Herstellung von Titandioxid. Es kann 0,1 - 10 Gew.-%, 0,1 - 8 Gew.-%, 0,1 - 3 Gew.-% oder 0,1 - 1 Gew.-% Sulfat, bezogen auf das Gesamtgewicht des anorganischen Materials, enthalten.

In einer Ausführungsform der Erfindung ist das anorganische Füllmaterial nanokristallines Titandioxid mit kristalliner Anatas-Phase, das aus dem Titandioxid-Herstellungsprozess nach dem Sulfatverfahren stammt ("Industrial Inorganic Pigments", ed. G. Buxbaum, G. Pfaff, Wiley-VCH, 3rd edition, Weinheim 2005). Dieses Material zeigt aufgrund seiner spezifischen Merkmale, z.B. seiner kleinen Primärpartikelgröße (ca. 5 nm), seiner nanokristallinen Struktur mit einer polaren Oberflächenstruktur, seiner Fähigkeit Wasser zu absorbieren und freizusetzen, und seinem Restsulfat- (oder Schwefelsäure)-gehalt, welches/welche die Leitfähigkeit unterstützt, besonders vorteilhafte Eigenschaften und wird daher bevorzugt.

In einer spezifischen Ausführungsform der Erfindung ist das anorganische Füllmaterial nicht Siliziumdioxid, Zirkoniumphosphat oder Zirkoniumphosphatsulfophenylphosphonat. In einer anderen Ausführungsform der Erfindung ist das anorganische Füllmaterial, das mit organischen Resten funktionalisiert ist, nicht organisch-modifiziertes Siliziumdioxid oder ein organisch-modifiziertes Silan.

In einer Ausführungsform der Erfindung ist das anorganische Füllmaterial Titandioxid, beispielsweise nanokristallines Titandioxid das teilweise oder vollständig in Form von Anatas vorliegt, wobei die Oberfläche des Titandioxids mit kovalent und/oder nicht-kovalent gebundenen organischen Resten modifiziert ist, wobei die organischen Reste ausgewählt werden aus der Gruppe bestehend aus Organopolysiloxanen, Diorganopolysiloxanen, aromatischen und aliphatischen Polyalkoholen oder Kombinationen davon, wobei der Organorest Alkyl, Phenyl, Vinyl und/oder Trifluoralkyl sein kann und die Polyalkohole mindestens zwei oder mindestens drei Hydroxylgruppen enthalten. Alkyl kann in diesem Zusammenhang C₁-C₃₀ Alkyl, vorzugsweise C₁-C₂₀ Alkyl sein. Beispiele für geeignete Polysiloxane sind Polydimethylsiloxan, Polydiphenylsiloxan, Polymethylphenylsiloxan, Polyphenylhydrosiloxan und/oder Polymethylhydrosiloxan. Beispiele für geeignete Polyalkohole sind Trimethylolethan, Trimethylolpropan, Trimethylolbutan, Trimethylolpentan, Phenole, Diphenole und Triphenole sowie andere mehrwertige aromatische Alkohole mit kondensierten Ringsystemen. In einer besonderen Ausführungsform ist das organische Polymer ein sulfoniertes organisches Polymer, vorzugsweise SPEEK.

Die vorliegende Erfindung bezieht sich auch auf ein Verfahren zur Herstellung einer Membran gemäß der Erfindung. Dieses Verfahren umfasst die Schritte:
Umsetzen des anorganischen Füllmaterials mit einer organischen Verbindung, um ein funktionalisiertes anorganisches Füllmaterial zu erhalten;
Dispergieren des funktionalisierten anorganischen Füllmaterials in einem organischen Polymergrundmaterial, das in einem geeigneten Lösungsmittel aufgelöst ist, um eine Hybridpolymerlösung zu erhalten; und
Entfernen des Lösungsmittels aus der Hybridpolymerlösung.

Um die kovalente Bindung der organischen Verbindung an das anorganische Füllmaterial zu erlauben, kann die organische Verbindung eine hydrophile oder reaktive Gruppe umfassen. In einer spezifischen Ausführungsform kann diese Gruppe eine Hydroxy- oder Si-H-Gruppe sein. Zusätzlich kann die organische Verbindung einen hydrophoben Anteil umfassen.

Bei dem Umsetzungsschritt kann es sich auch um einen Adsorptionsschritt handeln, in dem der organische Rest nicht-kovalent, z.B. über Wasserstoffbrückenbindungen, elektrostatische Wechselwirkungen oder van-der-Waals Wechselwirkungen, an die Oberfläche des anorganischen Füllmaterials gebunden wird.

Für den Dispersionsschritt kann das organische Polymergrundmaterial in einem geeigneten Lösungsmittel, z.B. einem organischen Lösungsmittel wie z.B. DMSO, aufgelöst werden, um nach Zugabe des anorganischen Materials eine Hybridpolymerlösung mit suspendiertem anorganischen Material zu erhalten. Durch das Gießen (solvent casting) der Lösung und Entfernen des Lösungsmittels, z.B. durch das Verdampfen des Lösungsmittels bei erhöhter Temperatur und/oder verringertem Druck, wird eine Membran oder eine Dünnfilmmembran erhalten. Die erhaltene Membran kann dann einem oder mehreren zusätzlichen Trocknungsschritten unterzogen werden, z.B. unter verringertem Druck und/oder bei erhöhter Temperatur.

Die Dicke der Membran kann 30-200 µm, 40-100 µm oder vorzugsweise 60-80 µm betragen.

Die so erhaltenen Membranen können für die Herstellung einer Brennstoffzelle, insbesondere einer Polymerelektrolytmembranbrennstoffzelle (PEMFC), verwendet werden. Die Erfindung betrifft somit auch die durch das erfindungsgemäße Verfahren erhältlichen Membranen.

Die Membranen der vorliegenden Erfindung haben, verglichen mit SPEEK-Membranen ohne oder mit den im Stand der Technik bekannten anorganischen Zusatzstoffen, die Vorteile, dass sie keine strukturellen Mängel, wie z.B. Löcher oder Aggregate in der Membran aufweisen und dass die Membran homogener ist. Darüber hinaus haben sie eine vergleichsweise verringerte Durchlässigkeit für den Brennstoff (Methanol), niedrigere Wasseraufnahmekoeffizienten, eine höhere Widerstandsfähigkeit gegenüber flüssigem Wasser, eine verbesserte Stabilität unter hoher relativer Luftfeuchtigkeit, eine ausreichend hohe Protonenleitfähigkeit, eine höhere Glasübergangstemperatur und verbesserte mechanische Festigkeit.

Die vorliegende Erfindung betrifft ebenfalls eine Brennstoffzellmembran, die bei Temperaturen > 80°C, vorzugsweise > 100°C, eine (Protonen-)Leitfähigkeit ≥ 0,03, vorzugsweise ≥ 0,05, noch bevorzugter ≥ 0,07 Scm⁻¹ und ein Elastizitätsmodul von ≥500 MPa, vorzugsweise ≥750 MPa, noch bevorzugter ≥1000 MPa aufweisen. Diese Brennstoffzellmembran kann beispielsweise durch ein erfindungsgemäßes Verfahren erhältlich sein. In einer Ausführungsform einer solchen Brennstoffzellemembran ist das anorganische Füllmaterial Titandioxid, beispielsweise nanokristallines Titandioxid das teilweise oder vollständig in Form von Anatas vorliegt, wobei die Oberfläche des Titandioxids mit kovalent und/oder nicht-kovalent gebundenen organischen Resten modifiziert ist, wobei die organischen Reste ausgewählt werden aus der Gruppe bestehend aus Organopolysiloxanen, Diorganopolysiloxanen, aromatischen und aliphatischen Polyalkoholen oder Kombinationen davon, wobei der Organorest Alkyl, Phenyl, Vinyl und/oder Trifluoralkyl sein kann und die Polyalkohole mindestens zwei oder mindestens drei Hydroxylgruppen enthalten. Alkyl kann in diesem Zusammenhang C₁-C₃₀ Alkyl, vorzugsweise C₁-C₂₀ Alkyl sein. Beispiele für geeignete Polysiloxane sind Polydimethylsiloxan, Polydiphenylsiloxan, Polymethylphenylsiloxan, Polyphenylhydrosiloxan und/oder Polymethylhydrosiloxan. Beispiele für geeignete Polyalkohole sind Trimethylolethan, Trimethylolpropan, Trimethylolbutan, Trimethylolpentan, Phenole, Diphenole und Triphenole sowie andere mehrwertige aromatische Alkohole mit kondensierten Ringsystemen. In einer besonderen Ausführungsform einer solchen Membran ist das organische Polymer ein sulfoniertes organisches Polymer, vorzugsweise SPEEK.

Weitere Ausführungsformen der Erfindung sind in den Ansprüchen und den Beispielen enthalten. Die folgenden Beispiele dienen der Veranschaulichung der Erfindung, wobei die Erfindung nicht auf diese speziellen Ausführungsformen beschränkt ist.

### Beispiele

### Beispiel 1: Synthese von sulfoniertem Polyetheretherketon (SPEEK)

Sulfoniertes PEEK (SPEEK) wurde durch das Umsetzen von PEEK (PEEK, Victrex, 450P, MW = 38300) mit konzentrierter Schwefelsäure bei 50°C für 2 Stunden wie von Di Vona et al. beschrieben hergestellt (M. L. Di Vona, L. Luchetti, G. P. Spera, E. Sgreccia, P. Knauth, C. R Chemie, 2008, 11, 1074).

Die Lösung wurde unter fortgesetztem Rühren in einen großen Überschuss eiskaltes Wasser geschüttet. Nach dem Stehenlassen über Nacht wurde das weiße Präzipitat abfiltriert und mehrere Male mit kaltem Wasser bis zum neutralen pH-Wert gewaschen. Das sulfonierte Polymer (SPEEK) wurde über Nacht bei 80-85°C getrocknet. Der Sulfonierungsgrad (DS) wurde sowohl mittels ¹H NMR als auch durch Titration gemäß dem von Mikhailenko et al. beschriebenen Verfahren (S. D. Mikhailenko, S. M. J. Zaidi, S. Kaliaguine, Catalysis Today, 2001, 67, 225, S. M. J. Zaidi, S. Kaliaguine, Catalysis Today, 2001, 67, 225) bestimmt. Beide Verfahren ergaben übereinstimmend einen Sulfonierungsgrad von 0,77.

Titandioxidpartikel, die als anorganisches Füllmaterial verwendet wurden, wurden gemäß den folgenden Verfahren (Beispiel 2 und 3) hergestellt:

### Beispiel 2: Herstellung von THP-funktionalisiertem Titandioxid LTHP-TiO₂)

Titanhydrat (mikrokristalliner Anatas, BET = ca. 350 m²/g), das aus dem konventionellen Sulfatverfahren ("Industrial Inorganic Pigments", ed. G. Buxbaum, G. Pfaff, Wiley-VCH, 3rd edition, Weinheim 2005) nach dem Hydrolyse- und Bleichschritt stammte, wurde mit Ammoniak neutralisiert, gründlich gewaschen und schließlich sprühgetrocknet. Der Sulfatgehalt in dem resultierenden Produkt betrug ca. 0,3 Gew.-% (Verhältnis SO₄/TiO₂).

Die Funktionalisierung der Oberfläche der Partikel mit Tri(hydroxymethyl)propan (TMP) wurde durch das Aufsprühen von 100 g TMP-Lösung (50% TMP in Wasser) auf das Titanhydrat (ausgebreitet in einer Plastikwanne) unter ständigem Mischen und anschließendem Trocknen bei 110°C in einem Trockenschrank durchgeführt.

Der Kohlenstoffgehalt in dem Endprodukt (THP-TiO₂) betrug 4,8 Gew.-%. Das entspricht 8,9 Gew.-% TMP.

### Beispiel 3: Herstellung von Silikonöl-funktionalisiertem Titandioxid (SOIL- TiO₂) Die Herstellung des Titanhydrals/Tiandioxid erfolgte wie in Beispiel 2 beschrieben.

Die Oberflächenfunktionalisierung wurde mit Polymethylhydrosiloxan MH 15 (Momentive Performance Materials, Leverkusen, CAS-Nummer 63148-57-2) durchgeführt. Dieses Silikonöl mit hochreaktiven Si-H Gruppen und einer Viskosität von 13-17 mPa * s wurde in Aceton (1:1) verdünnt, um die Viskosität zu verringern, und unter ständigem Mischen auf das Titanhydrat (ausgebreitet in einer Plastikwanne) gesprüht. Das Produkt wurde anschließend bei 110°C in einem Trockenschrank getrocknet.

Der Kohlenstoffgehalt in dem Endprodukt (SOIL-TiO₂) betrug 2,1 Gew.-%. Das entspricht 9,5 Gew.-% Silikonöl.

### Beispiel 4: Membranherstellung

SPEEK-basierte Kompositmembranen, die 5 Gew.-% funktionalisiertes TiO₂ enthielten, wurden durch das Auflösen des Polymers (SPEEK) in Dimethylsulfoxid (DMSO) und Zugabe des anorganischen Füllmaterials hergestellt.

Zu diesem Zweck wurde SPEEK (250 mg) in 20 ml Lösungsmittel (DMSO) aufgelöst und 12,5 mg THP-TiO₂ (hergestellt gemäß Beispiel 2) oder SOIL-TiO₂ (hergestellt gemäß Beispiel 3) zu der Lösung zugegeben. Die resultierende Mischung wurde für 4 Stunden gerührt, auf 5 ml eingedampft, auf eine Petrischale geschüttet und bis zur Trockenheit erhitzt. Nach Abkühlung auf Raumtemperatur wurde die Membran abgezogen, bei reduziertem Druck und 80°C für 24 Stunden getrocknet und dann im Ofen bei 140 °C für 64 Stunden getrocknet, um das Lösungsmittel zu entfernen. Die Dicke der resultierenden Membranen lag im Bereich von ∼ 60-80 µm.

Reine SPEEK-Membranen, d.h. ohne anorganische Zusätze, wurden gemäß demselben Verfahren hergestellt.

### Beispiel 5: Wasseraufnahmekoeffizienten

Die erhaltenen organisch-anorganischen Hybridmembranen haben stark verringerte Wasseraufnahmekoeffizienten (Tabelle 1) und sind verglichen mit SPEEK-Membranen ohne funktionalisiertes anorganisches Füllmaterial gegenüber flüssigem Wasser und hoher relativer Luftfeuchtigkeit extrem resistent.

Die Wasseraufnahme wurde durch vollständiges Untertauchen für Zeiträume zwischen einer Stunde und sechs Tagen in deionisiertem Wasser bei Temperaturen zwischen 25 und 145°C gemessen: Die Polymerproben wurden vor und nach dem Untertauchen (hydrothermale Behandlungen über 100°C wurden in hermetisch geschlossenen Teflongefäßen durchgeführt) gewogen. Nach dem Untertauchen und vor dem Wiegen wurden die Membranen in deionisiertem Wasser bei Raumtemperatur für 24 Stunden equilibiriert.

**Tabelle 1: Wasseraufnahmekoeffizienten (Anzahl von Wassermoleküle pro Sulfonsäuregruppe) beim Gleichgewicht in deionisiertem Wasser bei verschiedenen Temperaturen**

| Temperatur [°C] | S-PEEK | S-PEEK/THP-TiO₂ | S-PEEK/Soil-TiO₂ |
|---|---|---|---|
| 25 | 4,4 | 3,7 | 3,8 |
| 105 | 103* | 77 | 46 |
| 125 | 114* | 90 | 62 |
| 145 | 219* | 100 | 69 |

| | | | |
|---|---|---|---|
| * nach einer Stunde des Untertauchens (vollständige Auflösung bei längeren Zeiträumen) | | | |

### Beispiel 6: Protonenleitlähigkeit

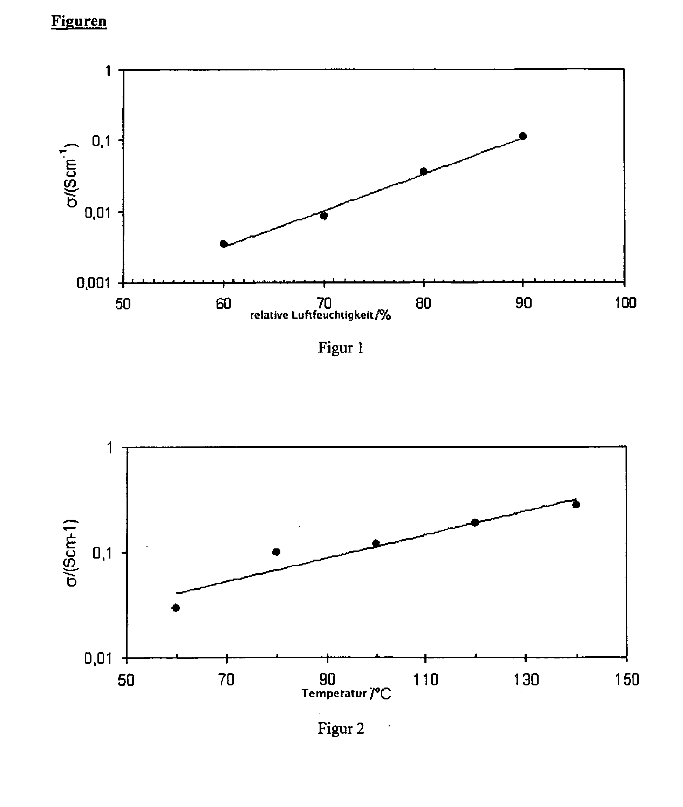

Die Protonenleitfähigkeit der erfindungsgemäßen Membranen bleibt hoch genug, um die Verwendung als feste Elektrolytmembran zu erlauben (siehe Fig. 1 und Fig. 2). Selbst bei Verwendung von TiO₂ Partikeln mit hydrophob funktionalisierter Oberfläche werden Leitfähigkeitswerfe von über 0,1 S/cm erhalten.

Die Leitfähigkeitsmessungen wurden mit 8mm durchmessenden und 100 µM dicken Membranen, die zwischen Gasdiffusionselektroden lagen, die mittels poröser Scheiben aus rostfreien Stahl auf die Membranoberflächen gepresst wurden, durchgerührt. Der Druck, der die Membran zwischen den Elektroden einklemmte, wurde vor dem Start der Messungen angewandt und während dem Experiment nicht kontrolliert. Die Membranleitfähigkeit wurde als Funktion der Temperatur und relativen Luftfeuchtigkeit durch Impedanzspektroskopie mit einem Solatron SI 1260 Impedanzanalysator im Frequenzbereich 10 Hz bis 1 MHz bei einer Signalstärke ≤100mV bestimmt. Die relative Luftfeuchtigkeit im Temperaturbereich von 80-150 °C wurde wie in Alberti et al. beschrieben kontrolliert (G. Alberti, M. Casciola, L. Massinelli, B. Bauer, J. Membrane Sci. 2001,185, 73).

### Beispiel 7: Mechanische Eigenschaften

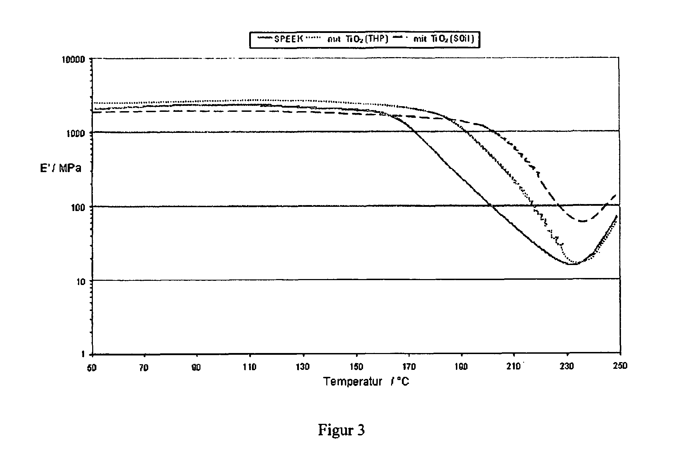

Die mechanischen Eigenschaften (Fig. 3) der beiden erfindungsgemäßen Membranen sind ziemlich ähnlich, wobei die hydrophob modifizierten TiO₂-Membranen eine leicht erhöhte Glasübergangstemperatur besitzen. Das kann auf die bessere Homogenität dieser Membranen zurückgeführt werden, da die hydrophilen Partikel dazu neigen, innerhalb der Membran zu verklumpen.

Die mechanischen Eigenschaften wurden unter Verwendung einer ADAMEL Lhomargy DY30 Testmaschine bei Raumtemperatur bei einer konstanten Traversengeschwindigkeit von 5 mm/min mit Aluminiumprobenhaltern durchgeführt. Besondere Aufmerksamkeit wurde auf die makroskopische Homogenität der Membranen, die durch Schütten erzeugt worden waren, gelegt und für die mechanischen Tests wurden nur homogene Membranen verwendet. Der Klemmdruck wurde gemäß einem vorläufigen Zugspannungsbelastungstest bestimmt: er betrug ungefähr 40 % der Elastizitätsgrenze, was dem linearen Teil der Spannungskurve entspricht. Die Aluminiumprobenhalter und die Membranen besaßen dieselbe Breite. Die uniaxialen Zugeigenschaften wurden mit Membranproben mit 200 µm Dicke, 5mm Breite und 25 mm Länge gemessen. Die Ränder der Membranen, wo Inhomogenitäten in der Zusammensetzung vorkommen können, wurden durch das sorgfältige Ausschneiden der Proben entfernt. Die ausgewählten Spannungskurven entsprachen nur Tests, bei denen schließlich die Membran im nützlichen Teil der Probe riß. Die anderen Fälle des Reißens (<20%), z.B. nahe oder unter den Halterungsstellen, wurden eliminiert. Vor den Messungen wurden die Polymerproben bei Raumtemperatur und einer relativen Luftfeuchtigkeit von ungefähr 50% stabilisiert. Die Messzeit betrug weniger als 5 min (Di Vona, M. L.; Sgreccia, E.; Licoccia, S.; Khadhraoui, M.; Denoyel, R.; Knauth, P. Chem. Mater. 2008,20,4327).

### Beispiel 8: Rasterkraftmikroskopie (AFM)

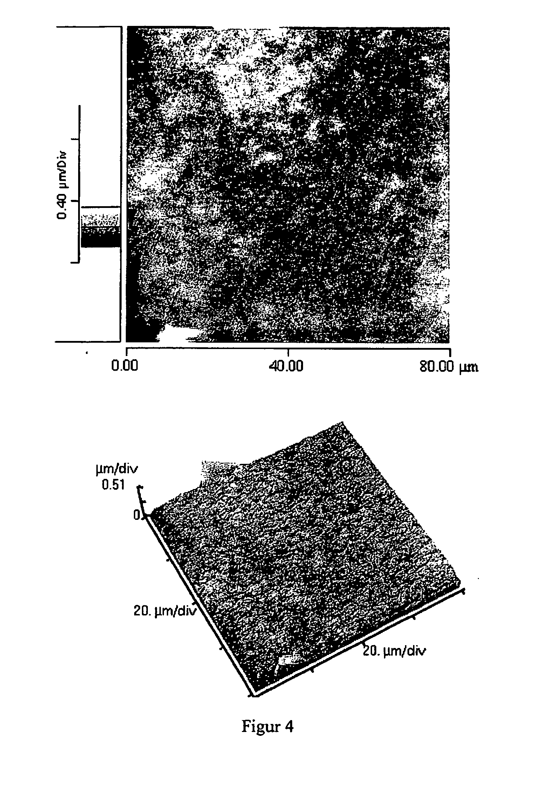

Die Rasterkraftmikroskopie (AFM)-Bilder wurden im Kontaktmodus mit einem Park-Autoprobe CP durchgeführt. Die AFM-Bilder (Fig. 4) zeigten in allen Fällen, das die erfindungsgemäßen Membranen, im Gegensatz zu Membranen, die in der Literatur beschrieben wurden, keine Löcher aufwiesen. Das stellt eine weitere wichtige Verbesserung der erfindungsgemäßen Membranen dar.

## Patentansprüche

1. Brennstoffzellmembran umfassend ein organisches Polymermaterial und ein anorganisches Füllmaterial, wobei das anorganische Füllmaterial mit organischen Verbindungen, die an die Oberfläche des anorganischen Füllmaterials gebunden sind, funktionalisiert ist, **dadurch gekennzeichnet, dass** das mit organischen Verbindungen funktionalisierte anorganische Füllmaterial Titandioxid ist, das mit aliphatischen oder aromatischen Polyalkoholen, Diorganopolysiloxanen oder Organopolysiloxanen, wobei der Organorest Alkyl, Phenyl, Vinyl und/oder Trifluoralkyl ist, funktionalisiert ist, und dass das organische Polymermaterial ein sulfoniertes organisches Polymer ist.

2. Brennstoffzellmembran nach Anspruch 1, **dadurch gekennzeichnet, dass** die organischen Verbindungen kovalent und/oder nicht-kovalent an die Oberfläche des anorganischen Füllmaterials gebunden sind.

3. Brennstoffzellmembran nach Anspruch 1 oder 2, **dadurch gekennzeichnet, dass** die organischen Verbindungen über mindestens ein Kohlenstoff- oder Siliziumatom kovalent an die Oberfläche des anorganischen Füllmaterials gebunden sind.

4. Brennstoffzellmembran nach Anspruch 1 oder 2, **dadurch gekennzeichnet, dass** die organischen Verbindungen über Wasserstoffbrückenbindungen oder van-der-Waals-Wechselwirkungen nicht-kovalent an die Oberfläche des anorganischen Füllmaterials gebunden sind.

5. Brennstoffzellmembran nach Anspruch 4, **dadurch gekennzeichnet, dass**
(1) die organischen Verbindungen eine oder mehrere Hydroxylgruppen aufweisen, die über Wasserstoffbrückenbindungen nicht-kovalent an die Oberfläche des anorganischen Füllmaterials gebunden sind; oder
(2) die organischen Verbindungen ein Molekulargewicht von > 800 besitzen und über van-der-Waals-Wechsetwirkungen nicht-kovalent an die Oberfläche des anorganischen Füllmaterials gebunden sind.

6. Brennstoffzellmembran nach einem der Ansprüche 1-5, **dadurch gekennzeichnet, dass** die Diorganopolysiloxane oder Organopolysiloxane Silikonöle sind, wobei die Silikonöle vorzugsweise ausgewählt werden aus der Gruppe bestehend aus Polydimethylsiloxan, Polydiphenylsiloxan, Polymethylphenylsiloxan, Polyphenylhydrosiloxan und Polymethylhydrosiloxan oder Mischungen davon.

7. Brennstoffzellmembran nach einem der Ansprüche 1-5, **dadurch gekennzeichnet, dass** die Polyalkohole aliphatische Polyalkohole mit mindestens drei Hydroxylgruppen pro Molekül sind, wobei die aliphatische Polyalkohole vorzugsweise ausgewählt werden aus der Gruppe bestehend aus Trimethylolethan, Trimethylolpropan, Trimethylolbutan und Trimethylolpentan.

8. Brennstoffzellmembran nach einem der Ansprüche 1-7, **dadurch gekennzeichnet, dass** der Sulfonierungsgrad des sulfonierten organischen Polymermaterials ≥0,6 pro Wiederholungseinheit ist.

9. Brennstoffzellmembran nach einem der Ansprüche 1-8, **dadurch gekennzeichnet, dass** das organische Polymermaterial ausgewählt wird aus sulfoniertem Tetrafluorethylencopolymeren (Nafion®), sulfonierten Polyetherketonen (SPEK), sulfonierten Polyetherketonketonen (SPEKK), sulfonierten Polyetheretherketonen (SPEEK), sulfonierten Polyetherketonetherketonketonen (SPEKEKK), sulfonierten Poly-p-Phenylenen (SPP), sulfonierten Poly(4-Phenoxybenzoyl-1,4-Phenylenen) (SPPBP), sulfonierten Polyphenylenoxiden (SPPO), sulfonierten Polyphenylensulfiden (SPPS), sulfonierten Polysulfonen (SPSF), sulfonierten Polyphenylsulfiden (SPPSU) und sulfonierten Polyethersulfonen (SPES).

10. Brennstoffzellmembran nach einem der Ansprüche 1-9, **dadurch gekennzeichnet, dass**
(1) das anorganische Füllmaterial in dem organischen polymeren Grundmaterial dispergiert ist; und/oder
(2) das anorganische Füllmaterial eine mittlere Partikelgröße von ≤100 nm, ≤50 nm oder ≤10 nm besitzt; und/oder
(3) das anorganische Füllmateral eine BET-Oberfläche von ≥ 20 m²/g, ≥ 70 m²/g oder ≥ 250 m²/g besitzt; und/oder
(4) das anorganische Füllmaterial nach dem Trocknen bei 120°C einen Glühverlust von ≥ 1 New.-%, ≥ 2,5 Gew.-% oder ≥ 10 Gew.-% aufweist; und/oder
(5) die Menge an anorganischem Füllmaterial 2-15 Gew.-% bezogen auf das Gesamtgewicht der Membran beträgt; und/oder
(6) das anorganische Füllmaterial nanokristallines Titandioxid ist; und/oder
(7) das anorganische Füllmaterial 0,1 - 8,0 Gew.-%, 0,1 - 3,0 Gew.-% oder 0,1 -1,0 Gew.-% Sulfat enthält; und/oder
(8) das anorganische Füllmaterial Anatas ist.

11. Brennstoffzellmembran nach einem der Ansprüche 1-10, **dadurch gekennzeichnet, dass**
(1) die Brennstoffzellmembran bei Temperaturen > 80°C eine Protonenleitfähigkeit von ≥ 0,03 Scm⁻¹ und ein Elastizitätsmodul ≥500 MPa besitzt; und/oder
(2) die Brennstoffzellmembran bei Temperaturen > 100°C eine Protonenleiffähigkeit ≥ 0,05 Scm⁻¹ und ein Elastizitätsmodul von ≥1000 MPa besitzt.

12. Verfahren zur Herstellung einer Membran nach einem der Ansprüche 1-11, umfassend die Schritte:
Umsetzen des anorganischen Füllmaterials mit einer organischen Verbindung, um ein organisch funktionalisiertes anorganisches Füllmaterial zu erhalten;
Dispergieren des organisch funktionalisierten anorganischen Füllmaterials in einem organischen Polymermaterial, das in einem geeigneten Lösungsmittel gelöst ist, um eine Hybridpolymerlösung zu erhalten; und
Entfernen des Lösungsmittels aus der Hybridpolymerlösung, um die Membran zu erhalten.

13. Verwendung einer Membran nach einem der Ansprüche 1-11 zur Herstellung einer Brennstoffzelle.

14. Brennstoffzelle umfassend eine Membran nach einem der Ansprüche 1-11.

## Claims

1. Fuel cell membrane comprising an organic polymer material and an inorganic filling material, wherein the inorganic filling material is functionalised with organic compounds that are bonded to the surface of the inorganic filling material, **characterised in that** the inorganic filling material functionalised with organic compounds is titanium dioxide functionalised with aliphatic or aromatic polyalcohols, diorganopolysiloxanes or organopolysiloxanes, wherein the organo radical is alkyl, phenyl, vinyl and/or trifluoroalkyl, and **in that** the organic polymer material is a sulfonated organic polymer.

2. Fuel cell membrane according to claim 1, **characterised in that** the organic compounds are bonded covalently and/or non-covalently to the surface of the inorganic filling material.

3. Fuel cell membrane according to claim 1 or 2, **characterised in that** the organic compounds are bonded covalently to the surface of the inorganic filling material *via* at least one carbon or silicon atom.

4. Fuel cell membrane according to claim 1 or 2, **characterised in that** the organic compounds are bonded non-covalently to the surface of the inorganic filling material *via* hydrogen bonds or van der Waals interactions.

5. Fuel cell membrane according to claim 4, **characterised in that**
(1) the organic compounds contain one or more hydroxyl groups which are bonded non-covalently to the surface of the inorganic filling material *via* hydrogen bonds; or
(2) the organic compounds have a molecular weight of > 800 and are bonded non-covalently to the surface of the inorganic filling material *via* van der Waals interactions.

6. Fuel cell membrane according to any one of claims 1 to 5, **characterised in that** the diorganopolysiloxanes or organopolysiloxanes are silicone oils, wherein the silicone oils are preferably selected from the group consisting of polydimethylsiloxane, polydiphenylsiloxane, polymethylphenylsiloxane, polyphenylhydrosiloxane and polymethylhydrosiloxane or mixtures thereof,

7. Fuel cell membrane according to any one of claims 1 to 5, **characterised in that** the polyalcohols are aliphatic polyalcohols having at least three hydroxyl groups per molecule, wherein the aliphatic polyalcohols are preferably selected from the group consisting of trimethylolethane, trimethylolpropane, trimethylolbutane and trimethylolpentane,

8. Fuel cell membrane according to any one of claims 1 to 7, **characterised in that** the degree of sulfonation of the sulfonated organic polymer material is ≥ 0.6 per repeating unit.

9. Fuel cell membrane according to any one of claims 1 to 8, **characterised in that** the organic polymer material is selected from sulfonated tetrafluoroethylene copolymer (Nafion®), sulfonated polyether ketones (SPEK), sulfonated polyether ketone ketones (SPEKK), sulfonated polyether ether ketones (SPEEK), sulfonated polyether ketone ether ketone ketones (SPEKEKK), sulfonated poly-p-phenylenes (SPP), sulfonated poly(4-phenoxybenzoyl-1,4-phenylenes) (SPPBP), sulfonated polyphenylene oxides (SPPO), sulfonated polyphenylene sulfides (SPPS), sulfonated polysulfones (SPSF), sulfonated polyphenyl sulfides (SPPSU) and sulfonated polyether sulfones (SPES).

10. Fuel cell membrane according to any one of claims 1 to 9, **characterised in that**
(1) the inorganic filling material is dispersed in the organic polymeric base material; and/or
(2) the inorganic filling material has a mean particle size of ≤ 100 nm, ≤ 50 nm or ≤ 10 nm; and/or
(3) the inorganic filling material has a BET surface area of ≥ 20 m²/g, ≥ 70 m²/g or ≥ 250 m²/g; and/or
(4) the inorganic filling material has an ignition loss after drying at 12°C of ≥1 % by weight, ≥ 2.5 % by weight or ≥ 10 % by weight; and/or
(5) the amount of inorganic filling material is from 2 to 15 % by weight, based on the total weight of the membrane; and/or
(6) the inorganic filling material is nanocrystalline titanium dioxide; and/or
(7) the inorganic filling material contains from 0.1 to 8.0 % by weight, from 0.1 to 3.0 % by weight or from 0.1 to 1.0 % by weight sulfate; and/or
(8) the inorganic filling material is anatase.

11. Fuel cell membrane according to any one of claims 1 to 10, **characterised in that**
(1) at temperatures > 80°C the fuel cell membrane has a proton conductivity of ≥ 0.03 Scm⁻¹ and a modulus of elasticity ≥ 500 MPa; and/or
(2) at temperatures > 100°C the fuel cell membrane has a proton conductivity ≥ 0.05 Scm⁻¹ and a modulus of elasticity of ≥ 1000 MPa.

12. Process for the production of a membrane according to any one of claims 1 to 11, comprising the steps:
reacting the inorganic filling material with an organic compound in order to obtain an organically functionalised inorganic filling material;
dispersing he organically functionalised inorganic filling material in an organic polymer material that is dissolved in a suitable solvent, in order to obtain a hybrid polymer solution; and
removing the solvent from the hybrid polymer solution in order to obtain the membrane.

13. Use of a membrane according to any one of claims 1 to 11 in the production of a fuel cell.

14. Fuel cell comprising a membrane according to any one of claims 1 to 11.

## Revendications

1. Membrane de pile à combustible comprenant un matériau polymère organique et un matériau de remplissage inorganique, le matériau de remplissage inorganique étant fonctionnalisé avec des composés organiques, qui sont reliés à la surface du matériau de remplissage inorganique, **caractérisée en ce que** le matériau de remplissage inorganique fonctionnalisé avec des composés organiques est le dioxyde de titane, qui est fonctionnalisé avec des polyalcools aliphatiques ou aromatiques, des diorganopolysiloxanes ou des organopolysiloxanes, le radical organo étant un alkyle, un phényle, un vinyle et/ou un trifluoroalkyle, et **en ce que** le matériau polymère organique est un polymère organique sulfoné.

2. Membrane de pile à combustible selon la revendication 1, **caractérisée en ce que** les composés organiques sont reliés de manière covalente et/ou non covalente à la surface du matériau de remplissage inorganique.

3. Membrane de pile à combustible selon la revendication 1 ou 2, **caractérisée en ce que** les composés organiques sont reliés de manière covalente par au moins un atome de carbone ou de silicium à la surface du matériau de remplissage inorganique.

4. Membrane de pile à combustible selon la revendication 1 ou 2, **caractérisée en ce que** les composés organiques sont reliés de manière non covalente par des ponts hydrogène ou des interactions de van der Waals à la surface du matériau de remplissage inorganique.

5. Membrane de pile à combustible selon la revendication 4, **caractérisée en ce que**
(1) les composés organiques comprennent un ou plusieurs groupes hydroxyle, qui sont reliés de manière non covalente par des ponts hydrogène à la surface du matériau de remplissage inorganique ; ou
(2) les composés organiques présentent un poids moléculaire > 800 et sont reliés de manière non covalente par des interactions de van der Waals à la surface du matériau de remplissage inorganique.

6. Membrane de pile à combustible selon l'une quelconque des revendications 1 à 5, **caractérisée en ce que** les diorganopolysiloxanes ou les organopolysiloxanes sont des huiles de silicone, les huiles de silicone étant de préférence choisies dans le groupe constitué par le polydiméthylsiloxane, le polydiphénylsiloxane, le polyméthylphénylsiloxane, le polyphénylhydrosiloxane et le polyméthylhydrosiloxane ou leurs mélanges.

7. Membrane de pile à combustible selon l'une quelconque des revendications 1 à 5, **caractérisée en ce que** les polyalcools sont des polyalcools aliphatiques contenant au moins trois groupes hydroxyle par molécule, les polyalcools aliphatiques étant de préférence choisis dans le groupe constitué par le triméthyloléthane, le triméthylolpropane, le triméthylolbutane et le triméthylolpentane.

8. Membrane de pile à combustible selon l'une quelconque des revendications 1 à 7, **caractérisée en ce que** le degré de sulfonation du matériau polymère organique sulfoné est ≥ 0,6 par unité de répétition.

9. Membrane de pile à combustible selon l'une quelconque des revendications 1 à 8, **caractérisée en ce que** le matériau polymère organique est choisi parmi les copolymères de tétrafluoroéthylène sulfonés (Nafion®), les polyéthercétones sulfonées (SPEK), les polyéthercétonecétones sulfonées (SPEKK), les polyétheréthercétones sulfonées (SPEEK), les polyéthercétoneéthercétonecétones sulfonées (SPEKEKK), les poly-p-phénylènes sulfonés (SPP), les poly(4-phénoxybenzoyl-1,4-phénylènes) sulfonés (SPPBP), les oxydes de polyphénylène sulfonés (SPPO), les sulfures de polyphénylène sulfonés (SPPS), les polysulfones sulfonées (SPSF), les sulfures de polyphényle sulfonés (SPPSU) et les polyéthersulfones sulfonées (SPES).

10. Membrane de pile à combustible selon l'une quelconque des revendications 1 à 9, **caractérisée en ce que**
(1) le matériau de remplissage inorganique est dispersé dans le matériau de base polymère organique ; et/ou
(2) le matériau de remplissage inorganique présente une taille de particule moyenne ≤ 100nm,≤ 50nm ou ≤ 10 nm ; et/ou
(3) le matériau de remplissage inorganique présente une surface BET ≥ 20 m²/g, ≥ 70 m²/g ou ≥ 250 m²/g ; et/ou
(4) le matériau de remplissage inorganique présente une perte par recuit après séchage à 120 °C ≥ 1 % en poids, ≥ 2,5 % en poids ou ≥10 % en poids ; et/ou
(5) la quantité de matériau de remplissage inorganique est de 2 à 15 % en poids par rapport au poids total de la membrane ; et/ou
(6) le matériau de remplissage inorganique est du dioxyde de titane nanocristallin ; et/ou
(7) le matériau de remplissage inorganique contient 0,1 à 8,0 % en poids, 0,1 à 3,0 % en poids ou 0,1 à 1,0 % en poids de sulfate ; et/ou
(8) le matériau de remplissage inorganique est de l'anatase.

11. Membrane de pile à combustible selon l'une quelconque des revendications 1 à 10, **caractérisée en ce que**
(1) la membrane de pile à combustible présente à des températures >80°C une conductivité des protons ≥ 0,03 Scm⁻¹ et un module d'élasticité ≥ 500 MPa ; et/ou
(2) la membrane de pile à combustible présente à des températures 100 °C une conductivité des protons ≥0,05 Scm⁻¹ et un module d'élasticité ≥ 1 000 MPa.

12. Procédé de fabrication d'une membrane selon l'une quelconque des revendications 1 à 11, comprenant les étapes :
faire réagir le matériau de remplissage inorganique avec un composé organique pour obtenir un matériau de remplissage inorganique fonctionnalisé organiquement ;
disperser le matériau de remplissage inorganique fonctionnalisé organiquement dans un matériau polymère organique, qui est dissous dans un solvant approprié, afin d'obtenir une solution de polymère hybride ; et
éliminer le solvant de la solution de polymère hybride, afin d'obtenir la membrane.

13. Utilisation d'une membrane selon l'une quelconque des revendications 1 à 11 pour la fabrication d'une pile à combustible,

14. Pile à combustible comprenant une membrane selon l'une quelconque des revendications 1 à 11.
